# EUROPEAN PATENT SPECIFICATION

(11) **EP 2 725 771 B1**
(45) Date of publication and mention of the grant of the patent: **18.11.2015**
(21) Application number: 12864677.5
(22) Date of filing: 20.09.2012
(51) Int. Cl.: H04M 3/56

(54) **CONFERENCE ACCESS METHOD, DEVICE AND SYSTEM**
VERFAHREN, VORRICHTUNG UND SYSTEM FÜR DEN ZUGRIFF AUF EINE KONFERENZ
PROCÉDÉ, DISPOSITIF, ET SYSTÈME POUR PERMETTRE L'ACCÈS À UNE CONFÉRENCE

(43) Date of publication of application: 30.04.2014
(73) Proprietor: Huawei Technologies Co., Ltd., Longgang District Shenzhen, Guangdong 518129 (CN)
(72) Inventor: ZHOU, Riming, Shenzhen City, Guangdong 518129 (CN)
(74) Representative: Maiwald Patentanwalts GmbH
(86) International application number: PCT/CN2012/081640
(87) International publication number: WO 2014/043868

(56) References cited:
- CN-A- 101 047 534
- CN-A- 101 621 392
- CN-A- 101 883 136
- US-A1- 2009 005 038
- US-B1- 6 646 997
- US-B1- 6 976 055
- US-B1- 7 174 365

## Description

### TECHNICAL FIELD

The present invention relates to the field of multimedia conferencing technologies, and in particular to a method, a device, and a system for accessing a conference.

### BACKGROUND

A multimedia conference system is a technology that enables people in different places to implement real-time, visual, and interactive multimedia communications over electrical communications and transmission media, enabling people to seemingly attend a conference at a same venue.

Currently, mainstream products of a multimedia conference system include a voice conference system, a video conference system, a desktop conference system, and the like. For a user, a process of accessing a conference system and joining a conference is roughly as follows: Firstly, the user learns a conference access number (Access Number) of the conference system and a conference passcode (Passcode) of the conference to be joined, where the conference access number is the access number of the conference system and used for call routing on a network so that a call request of the user reaches the corresponding conference system, and the conference passcode is used to identify the conference to be joined by the user in the conference system, because many different conferences may simultaneously exist in the conference system; secondly, a terminal used by the user sends a call request to a call control network according to the conference access number; thirdly, the call control network sends the call request to the corresponding conference system according to the conference access number so that the conference system processes the call request; fourthly, the conference system establishes a session with the terminal according to the call request, and sends an alert tone through the session to the terminal, requesting the terminal to enter the conference passcode; and fifth, the conference system receives the conference passcode that is sent by the terminal through the session, and adds the terminal to the corresponding conference.

Furthermore, the document, US6646997B1, describes a method of large-scale fault-tolerant audio conferencing in an audio conferencing system using a purely packet-switched network. An endpoint places a call to a conference gatekeeper indicating an audio conference. The conference gatekeeper determines whether the call contains sufficient information to establish the audio conference. If there is insufficient information, the endpoint is connected to an IVR server that obtains sufficient information from the endpoint. Either way, a CACS selects an MCU hosting or that will host the audio conference. The CACS then responds to the endpoint with routing instructions indicating the selected MCU and the endpoint connects or transfers to the selected MCU. The MCU mixes input from all endpoints in the audio conference to form a voice stream, which is then returned to each endpoint in the audio conference. Audio conference participants can dial-out from the MCU to bring additional participants into the audio conference. Once established, the audio conference supports full service audio conferencing. In addition, dynamic routing permits an operator to service multiple MCUs, and an audio conference participant and/or an entire audio conference to be moved between MCUs.

Generally, only one conference system is deployed in an enterprise. For a user, a conference access number always keeps unchanged and the user needs to care about only the conference access number each time the user attends a conference. However, multiple conference systems may be simultaneously deployed in a large or medium enterprise. For example, three conference systems, which are a voice conference system, a video conference system, and a desktop conference system, respectively, are simultaneously deployed in an enterprise. Then each conference system has a different conference access number, and each conference in the each conference system has a different conference passcode. In this case, to attend a conference, the user needs to care about both a conference access number and a conference passcode. If the user needs to attend many conferences one after another, a combination of a different conference access number and a different conference passcode needs to be entered multiple times during conference access.

### SUMMARY

In view of this, embodiments of the present invention provide a method, a device, and a system for accessing a conference, so as to resolve a problem in the prior art that a user needs to enter different conference access numbers to join conferences in different conference systems. The technical solutions are as follows:

According to a first aspect, a method for accessing a conference is provided. The method applied to an implementation environment having an apparatus for accessing a conference, a terminal and multiple conference systems, including:
receiving, by the apparatus for accessing a conference, a call request sent by the terminal, wherein the call request carries media information of the terminal and a unified access number that corresponds to the apparatus for accessing a conference; and sending a call response to the terminal so as to establish a first session with the terminal, wherein the call response carries media information of the apparatus for accessing a conference;
sending, by using the first session, information used to prompt for entering a conference passcode, and receiving a conference passcode sent by the terminal;
querying a conference access number that corresponds to the conference passcode sent by the terminal from at least two conference access numbers, wherein each conference access number corresponds to one of the multiple conference systems; wherein the querying specifically comprises: analyzing a format feature of the conference passcode sent by the terminal(101), and querying, according to correspondence between format features and conference access numbers, a conference access number that corresponds to the format feature of the conference passcode sent by the terminal(101) from the at least two conference access numbers; and
instructing, according to the queried conference access number and the conference passcode sent by the terminal, the terminal to establish a second session with a conference system that corresponds to the queried conference access number, so that the terminal joins a conference by using the second session.

In a first possible implementation manner of the first aspect, the instructing, according to the queried conference access number and the conference passcode sent by the terminal, the terminal to establish a second session with a conference system that corresponds to the queried conference access number, so that the terminal joins a conference by using the second session specifically includes::
sending, to the terminal, a call transfer request of which a transfer destination field carries the queried conference access number and the conference passcode sent by the terminal, so that the terminal sends, according to the queried conference access number carried in the call transfer request, a call request that carries the conference passcode sent by the terminal to a conference system corresponding to the queried conference access number so as to establish the second session with the conference system corresponding to the queried conference access number, and the conference system corresponding to queried conference access number adds the terminal to the conference according to the conference passcode sent by the terminal.

In a second possible implementation manner of the first aspect, before the instructing, according to the queried conference access number and the conference passcode sent by the terminal, the terminal to establish a second session with a conference system that corresponds to the queried conference access number, the method further includes:
sending, according to the queried conference access number, a call request that carries both the conference passcode sent by the terminal and the media information of the terminal to a corresponding conference system corresponding to the queried conference access number, and receiving media information of the corresponding conference system fed back by the conference system corresponding to the queried conference access number; and
the instructing, according to the queried conference access number and the conference passcode sent by the terminal, the terminal to establish a second session with a conference system that corresponds to the queried conference access number, so that the terminal joins a conference by using the second session includes:
   sending a session modification request that carries the media information of the conference system corresponding to the queried conference access number to the terminal, so that the terminal changes the media information of the apparatus for accessing a conference that is received during the establishment of the first session to the media information of the conference system corresponding to the queried conference access number so as to establish the second session with the conference system corresponding to the queried conference access number, and the conference system corresponding to the queried conference access number adds the terminal to the conference according to the conference passcode sent by the terminal.

In a third possible implementation manner of the first aspect if the querying a conference access number that corresponds to the conference passcode sent by the terminal includes: analyzing a format feature of the conference passcode send by the terminal, and querying, according to correspondence between format features and conference access numbers, the conference access number that corresponds to the format feature of the conference passcode send by the terminal from the at least two conference access numbers,
before the receiving a call request sent by the terminal, the method further includes:
obtaining the format feature of the conference passcode sent by the terminal allocated by the conference system that corresponds to the queried conference access number; and
generating correspondence between the format feature and the queried conference access number.

According to a second aspect, an apparatus for accessing a conference is provided. The apparatus applied to an implementation environment having the apparatus for accessing a conference, a terminal and multiple conference systems, includes:
a session establishing module, configured to receive a call request sent by a terminal, where the call request carries media information of the terminal and a unified access number that corresponds to the apparatus for accessing a conference; and send a call response to the terminal so as to establish a first session with the terminal, where the call response carries media information of the apparatus for accessing a conference;
a conference passcode receiving module, configured to send, by using the first session, information used to prompt for entering a conference passcode, and receive a conference passcode sent by the terminal;
a conference access number querying module, configured to query a conference access number that corresponds to the conference passcode send by terminal from at least two conference access numbers, where each conference access number corresponds to one of the multiple conference system; wherein the conference access number querying module specifically comprises a feature querying unit, the feature querying unit is configured to analyze a format feature of the conference passcode sent by the terminal, and query, according to correspondence between format features and conference access numbers, a conference access number that corresponds to the format feature of the conference passcode sent by the terminal from the at least two conference access numbers; and
an access instructing module, configured to instruct, according to the conference access number and the conference passcode send by the terminal, the terminal to establish a second session with a conference system that corresponds to the queried conference access number, so that the terminal joins a conference by using the second session.

In a first possible implementation manner of the second aspect, the access instructing module is specifically configured to send, to the terminal, a call transfer request, of which a transfer destination field carries the conference access number and the conference passcode send by the terminal, so that the terminal sends, according to the queried conference access number carried in the call transfer request, a call request that carries the conference passcode to a conference system corresponding to the queried conference access number so as to establish the second session with the conference system corresponding to the queried conference access number, and the conference system corresponding to queried conference access number adds the terminal to the conference according to the conference passcode send by the terminal..

In a second possible implementation manner of the second aspect, the apparatus for accessing a conference further includes an information acquiring module, where:
the information acquiring module is configured to send, according to queried conference access number, a call request that carries both the conference passcode send by the terminal and the media information of the terminal to a corresponding conference system corresponding to the queried conference access number, and receive media information of the corresponding conference system fed back by the conference system corresponding to the queried conference access number; and
the access instructing modul is specifically configured to send a session modification request that carries the media information of the conference system corresponding to the queried conference access number to the terminal, so that the terminal changes the media information of the apparatus for accessing a conference that is received during the establishment of the first session to the media information of the conference system corresponding to the queried conference access number so as to establish the second session with the conference system, and the conference system corresponding to the queried conference access number adds the terminal to the conference according to the conference passcode send by the terminal.

In a third possible implementation manner, if the conference access number querying module includes the feature querying unit, the apparatus for accessing a conference further includes:
a first relationship generating module, configured to obtain the format feature of the conference passcode send by the terminal allocated by the conference system that corresponds to the queried conference access number, and generate correspondence between the format feature and the queried conference access number.

According to a fourth aspect, a conference service system is provided. The system includes the apparatus for accessing a conference according to any one of the second aspect, the third aspect, or their possible implementation manners, and at least two conference systems.

The technical solutions provided by embodiments of the present invention bring the following beneficial effect:
a call request sent by a terminal is received, where the call request carries a unified access number; information used to prompt for entering a conference passcode is sent by using a first session established with the terminal, and a conference passcode sent by the terminal is received; a conference access number of a conference system that corresponds to the conference passcode is queried; and then the terminal is instructed, according to the conference access number and the conference passcode, to establish a second session with the corresponding conference system, so that the terminal joins a conference by using the second session, thereby resolving a problem in the prior art that a user needs to enter different conference access numbers so as to join conferences in different conference systems. In this way, the terminal may always access different conference systems by using a unified access number and different conference passcodes to join conferences.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of an implementation environment according to an embodiment of the present invention;
FIG. 2 is a flowchart of a method for accessing a conference according to an embodiment of the present invention;
FIG. 3 is a flowchart of a method for reserving a conference according to an embodiment of the present invention;
FIG. 4 is a flowchart of a method for accessing a conference according to another embodiment of the present invention;
FIG. 5 is a flowchart of a method for accessing a conference according to another embodiment of the present invention;
FIG. 6 is a structural block diagram of an apparatus for accessing a conference according to an embodiment of the present invention;
FIG. 7 is a structural block diagram of an apparatus for accessing a conference according to another embodiment of the present invention;
FIG. 8 is a structural block diagram of an apparatus for accessing a conference according to another embodiment of the present invention;
FIG. 9 is a structural block diagram of an apparatus for accessing a conference according to an embodiment of the present invention; and
FIG. 10 is a structural block diagram of a conference service system according to another embodiment of the present invention.

### DESCRIPTION OF EMBODIMENTS

To make the objectives, technical solutions, and advantages of the present invention more comprehensible, the following further describes the embodiments of the present invention in detail with reference to the accompanying drawings.

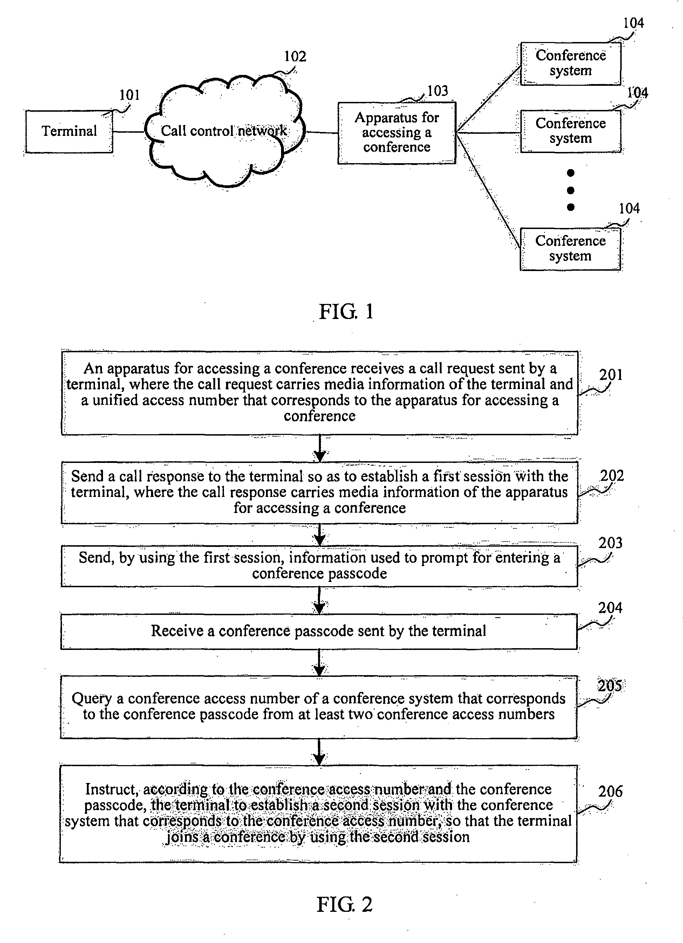

Refer to FIG. 1, which shows a schematic structural diagram of an implementation environment according to an embodiment of the present invention. The implementation environment includes a terminal 101, a call control network 102, an apparatus 103 for accessing a conference, and at least two conference systems 104.

The terminal 101 may be a soft terminal or an entity terminal supporting the SIP (Session Initiation Protocol, Session Initiation Protocol). For example, the terminal 101 may be a conference application program that runs on a desktop computer and supports the SIP, a video phone that supports the SIP, or the like.

The call control network 102 is generally a core equipment network capable of routing according to a called access number, such as an IMS (IP Multimedia Subsystem, IP multimedia subsystem) or NGN (Next Generation Network, next generation network) network. The call control network 102 may receive a call request from the terminal 101, and then route the call request to a corresponding conference system according to a conference access number.

The apparatus 103 for accessing a conference may be a computer, a server, or a device, and is a device newly added in this embodiment of the present invention. The apparatus 103 for accessing a conference is connected to both the call control network 102 and the conference systems 104. The apparatus 103 for accessing a conference may also be called a UCAG (Unified Conference Access Gateway, unified conference access gateway). The apparatus 103 for accessing a conference is configured to receive a call request that is sent by the terminal 101 according to a unified access number and then instruct the terminal 101 to establish.a session with a corresponding conference system 104, so that the conference system 104 adds the terminal 104 to a corresponding conference according to a conference passcode.

The at least two conference systems 104 are connected to the apparatus 103 for accessing a conference. The at least two conference systems 104 may be two or more conference systems, and a type of each of the conference systems 104 may be the same or different. For example, the at least two conference systems 104 are specifically four conference systems: one is a voice conference system, another is a desktop conference system, and the rest two are video conference systems.

Refer to FIG. 2, which shows a flowchart of a method for accessing a conference according to an embodiment of the present invention. In this embodiment, applying the method for accessing a conference to the apparatus 103 for accessing a conference shown, in FIG. 1 is used as an example for description. The method for accessing a conference includes the following steps:
Step 201: The apparatus for accessing a conference receives a call request sent by a terminal, where the call request carries media information of the terminal and a unified access number that corresponds to the apparatus for accessing a conference.

In this embodiment, a user accesses a conference by using only one access number. The access number is an access number of the apparatus for accessing a conference. In this specification, the access number of the apparatus for accessing a conference is called a unified access number, and no further details are provided herein. Specifically, to access a conference, the terminal may send a call request to the apparatus for accessing a conference according to the unified access number, where the call request further carries media information of the terminal. A call control network can route the call request to the apparatus for accessing a conference according to the unified access number. In this way, the apparatus for accessing a conference receives the call request sent by the terminal. Specifically, the call request of the terminal may be INVITE (Invite) message in the SIP protocol.
Step 202: Send a call response to the terminal so as to establish a first session with the terminal, where the call response carries media information of the apparatus for accessing a conference.

After receiving the call request sent by the terminal, the apparatus for accessing a conference may obtain the media information of the terminal. Then, the apparatus for accessing a conference sends a call response to the terminal to perform media channel negotiation with the terminal and establish the first session with the terminal, where the call response carries the media information of the apparatus for accessing a conference. The call response may be a 200 OK message in the SIP.
Step 203: Send, by using the first session, information used to prompt for entering a conference passcode.

After the apparatus for accessing a conference establishes the first session with the terminal, the apparatus for accessing a conference sends, by using the first session, information used to prompt for entering a conference passcode to the terminal. This process may be implemented by using IVR (Interactive Voice Response, interactive voice response).
Step 204: Receive a conference passcode sent by the terminal.

The terminal may send, through the established first session or an INFO message in the SIP protocol, a conference passcode of a conference to be joined by the terminal to the apparatus for accessing a conference. The apparatus for accessing a conference accordingly receives the conference passcode sent by the terminal.
Step 205: Query a conference access number that corresponds to the conference passcode from at least two conference access numbers.

The apparatus for accessing a conference may use either of the following two manners to implement this step:
1) Query, according to a correspondence between conference passcodes and conference access numbers, a conference access number that corresponds to the conference passcode from the at least two conference access numbers.
   The apparatus for accessing a conference may obtain the correspondence between conference passcodes and conference access numbers in advance. For example, the apparatus for accessing a conference provides a conference reservation function, receives conference passcodes from each conference system in a conference reservation process, and generates the correspondence between conference passcodes and conference access numbers according to the received conference passcodes. After receiving the conference passcode sent by the terminal, the apparatus for accessing a conference may query a conference access number that corresponds to the conference passcode according to the correspondence between conference passcodes and conference access numbers that is generated in the conference reservation process.
2) Analyze a format feature of the conference passcode, and query, according to correspondence between format features and conference access numbers, a conference access number that corresponds to the format feature of the conference passcode from the at least two conference access numbers.

The apparatus for accessing a conference may obtain the correspondence between format features of conference passcodes and conference access numbers in advance. Specifically, the apparatus for accessing a conference may obtain, in advance, a format feature of a conference passcode allocated by a conference system that corresponds to a conference access number; and then the apparatus for accessing a conference generates correspondence between the format feature and the conference access number of the conference system. For example, format features obtained by the apparatus for accessing a conference in advance are as follows: All conference passcodes generated by a conference system whose conference access number is 60681 are 5 digits, and all conference passcodes generated by a conference system whose conference access number is 60682 are 6 digits. Then the apparatus for accessing a conference may generate correspondence between the format feature of 5 digits of conference passcodes and the conference access number 60681, and correspondence between the format feature of 6 digits of conference passcodes and the conference access number 60682. After receiving the conference passcode sent by the terminal, the apparatus for accessing a conference may analyze a format feature of the conference passcode, and then query a conference access number that corresponds to the conference passcode according to the previously-generated correspondence between format features and conference access numbers.
Step 206: Instruct, according to the conference access number and the conference passcode, the terminal to establish a second session with a conference system that corresponds to the conference access number, so that the terminal joins a conference by using the second session.

The apparatus for accessing a conference may instruct, according to the found conference access number and the received conference passcode, the terminal to establish the second session with a specific conference system. The specific conference system is the conference system that corresponds to the conference access number found by the apparatus for accessing a conference, so that the terminal joins a conference by using the second session. Specifically, this step may be implemented in two manners: 1) the apparatus for accessing a conference sends a call transfer request to the terminal, where a transfer destination field of the call transfer request carries both the conference access number found by the apparatus for accessing a conference and the conference passcode received by the apparatus for accessing a conference, so that the terminal sends, according to the conference access number carried in the call transfer request, a call request that carries the conference passcode to the corresponding conference system so as to establish the second session with the conference system, and the conference system adds the terminal to a corresponding conference according to the conference passcode; 2) before this step, the apparatus for accessing a conference first sends, according to the conference access number of the conference system, a call request to the conference system, and receives media information of the conference system fed back by the conference system, where the call request carries the conference passcode and the media information of the terminal; and then the apparatus for accessing a conference sends a session modification request that carries the media information of the conference system to the terminal, so that the terminal changes the media information of the apparatus for accessing a conference that is received during the establishment of the first session to the media information of the conference system so as to establish the second session with the conference system, and the conference system adds the terminal to a corresponding conference according to the conference passcode.

The media information of the terminal, the media information of the apparatus for accessing a conference, and the media information of the conference system may be media information that meets a requirement of the SDP (Session Description Protocol, Session Description Protocol). The media information includes an IP address, a port number, a media type, a media format, and a transmission protocol.

In conclusion, in the method for accessing a conference according to this embodiment, a call request sent by a terminal is received, where the call request carries a unified access number; information used to prompt for entering a conference passcode is sent by using a first session established with the terminal, and a conference passcode sent by the terminal is received; a conference access number of a conference system that corresponds to the conference passcode is queried; and then the terminal is instructed, according to the conference access number and the conference passcode, to establish a second session with the corresponding conference system, so that the terminal joins a conference by using the second session, thereby resolving a problem in the prior art that a user needs to enter different conference access numbers so as to join conferences in different conference systems. In this way, the terminal may always access different conference systems by using a unified access number and different conference passcodes to join conferences.

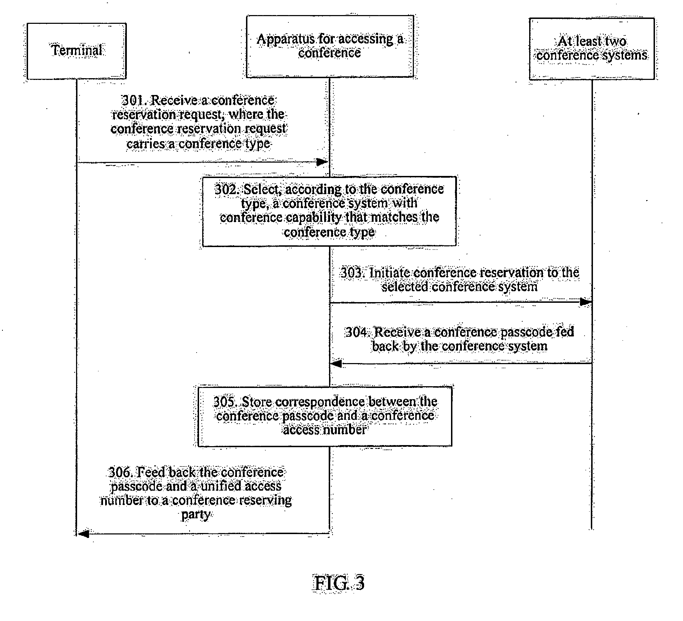

In step 205 of the preceding embodiment, the apparatus for accessing a conference may query the conference access number that corresponds to the conference passcode according to the previously-stored correspondence between conference passcodes and conference access numbers, and the apparatus for accessing a conference may store the correspondence between conference passcodes and conference access numbers in the conference reservation process. In view of this, refer to FIG. 3, which shows a flowchart of a method for reserving a conference according to an embodiment of the present invention. In this embodiment, applying the method for reserving a conference to the apparatus 103 for accessing a conference shown in FIG. 1 is used as an example for description. The method for reserving a conference includes the following steps:
Step 301: Receive a conference reservation request sent by a conference reserving party, where the conference reservation request carries a conference type that includes a voice conference, a video conference, or a desktop conference.

The apparatus for accessing a conference may receive a conference reservation request sent by a conference reserving party, where the conference reservation request carries a conference type that may be one of a voice conference, a video conference, or a desktop conference. In this embodiment, the conference reserving party being a terminal is used as an example for description. However, it should be noted that the conference reserving party may be a conference portal, and the conference portal is a website portal dedicated for reserving a conference. In other words, when setting multiple conference systems, an enterprise generally sets a website used for reserving a conference, called a conference portal.

Step 302: Select, according to the conference type, a conference system with conference capability that matches the conference type.

After receiving the conference reservation request, the apparatus for accessing a conference may select, according to the conference type carried in the conference reservation request, a conference system with conference capability that matches the conference type from at least two conference systems. For example, if the conference type is a video conference, the apparatus for accessing a conference selects a conference system with video conference capability from the at least two conference systems; or if the conference type is a desktop conference, the apparatus for accessing a conference selects a conference system with desktop conference capability from the at least two conference systems.

In a specific embodiment, two or more conference systems with the same conference capability may exist among the at least two conference systems. For example, two conference systems with the video conference capability exist among the at least two conference systems. In this case, if the conference type is a video conference, the apparatus for accessing a conference may select two or more conference systems with the matching conference capability. For this reason, if there are two or more conference systems with the matching conference capability, the apparatus for accessing a conference may select one of them according to a predefined policy, where the predefined policy includes any one of a polling policy, a load balancing policy, and a random policy.

Assuming that there are two or more conference systems with the video conference capability, the policies are described as follows:
Polling policy: When the conference type carried in the current conference reservation request is a video conference, the apparatus for accessing a conference selects a first conference system from two or more conference systems with the video conference capability; when the conference type carried in a next conference reservation request is a video conference, the apparatus for accessing a conference selects a second conference system from the two or more conference systems with the video conference capability; and again when the conference type carried in a next conference reservation request is a video conference, the apparatus for accessing a conference selects a third conference system from the two or more conference systems with the video conference capability; and similarly sequential selection is performed again and again.

Load balancing policy: The apparatus for accessing a conference may acquire corresponding load information from each conference system and save the corresponding load information. When the conference type carried in the current conference reservation request is a video conference, the apparatus for accessing a conference selects a conference system with the lightest load from the two or more conference systems with the video conference capability.

Random policy: When the conference type carried in the current conference reservation request is a video conference, the apparatus for accessing a conference randomly selects a conference system from the two or more conference systems with the video conference capability.
Step 303: Initiate conference reservation to the selected conference system.

After selecting a conference system with the matching conference capability, the apparatus for accessing a conference initiates conference reservation to the selected conference system, so that the conference system reserves corresponding resources of a voice server.
Step 304: Receive a corresponding conference passcode fed back by the conference system.

After the conference system successfully reserves the resources, the conference system feeds back a conference passcode to the apparatus for accessing a conference. In this way, the apparatus for accessing a conference can receive the corresponding conference passcode.

It should be supplemented that the conference systems may use different format features to generate conference passcodes so as to avoid that two different conference systems generate a same conference passcode. For example, a conference passcode generated by a conference system 1 starts with 1; and a conference passcode generated by a conference system 2 starts with 2. Certainly, the conference portal or the apparatus for accessing a conference may uniformly generate the conference passcode in the reservation process.
Step 305: Generate, according to the received conference passcode, correspondence between the conference passcode and a conference access number.

After receiving the corresponding conference passcode, the apparatus for accessing a conference generates a correspondence between the conference passcode and a conference access number. For example, the conference passcode is 012345, and a conference access number of the conference system is 60681. Then the apparatus for accessing a conference stores the correspondence between the conference passcode "012345" and the conference access number "60681 of the conference system. Certainly, in another storage form, the apparatus for accessing a conference may also store the correspondence between the conference passcode, a name of the conference system, and the conference access number of the conference system. For example, the conference passcode is 012345, the name of the conference system is Huax conference system, and the conference access number of the conference system is 60681. Then the apparatus for accessing a conference stores correspondence between the conference passcode "012345", the name "Huax conference system" of the conference system, and the conference access number "60681" of the conference system.
Step 306: Send the conference passcode and a unified access number to the conference reserving party.

The apparatus for accessing a conference feeds back a unified access number that specifies the apparatus for accessing a conference itself and the conference passcode generated in the conference reservation process to the terminal. The unified access number and the conference passcode serve as feedback to the conference reservation request sent by the terminal. For example, the apparatus for accessing a conference feeds back a unified access number "60000" that specifies the apparatus for accessing a conference itself and a conference passcode "012345" to the terminal.

It should be noted that the apparatus for accessing a conference feeds back a unified access number that specifies the apparatus for accessing a conference itself other than the conference access number of the conference system.

In addition, if the conference reservation request is sent by the conference portal, the apparatus for accessing a conference feeds back the unified access number that specifies the apparatus for accessing a conference itself and the conference passcode to the conference portal, and then the conference portal notifies the terminal through an email, a short message, or the like.

In conclusion, in the method for reserving a conference according to this embodiment, by storing the correspondence between conference passcodes and conference access numbers of conference systems in a correspondence reservation process, an apparatus for accessing a conference can always store the correlation in advance before a terminal initiates a call request. In addition, a unified access number other than a conference access number of a conference system is fed back, so that the terminal always initiates a call request to the unified access number to start a conference access process.

It should be supplemented that in an exemplary embodiment, the method for reserving a conference provided in this embodiment may be implemented as a part of a method for accessing a conference provided in an embodiment of the present invention. In one aspect, this makes it possible to feed back a unified access number and a conference passcode to the terminal, in other words, a conference reservation function is provided for the terminal; and in another aspect, a function of storing the correspondence between conference passcodes and conference access numbers of conference systems is implemented.

In the method for accessing a conference according to this embodiment of the present invention, two implementation manners are available for the apparatus for accessing a conference to instruct the terminal to establish the second session with the conference system that corresponds to the found conference access number. For a more detailed description of a first implementation manner, reference may be made to the following embodiment.

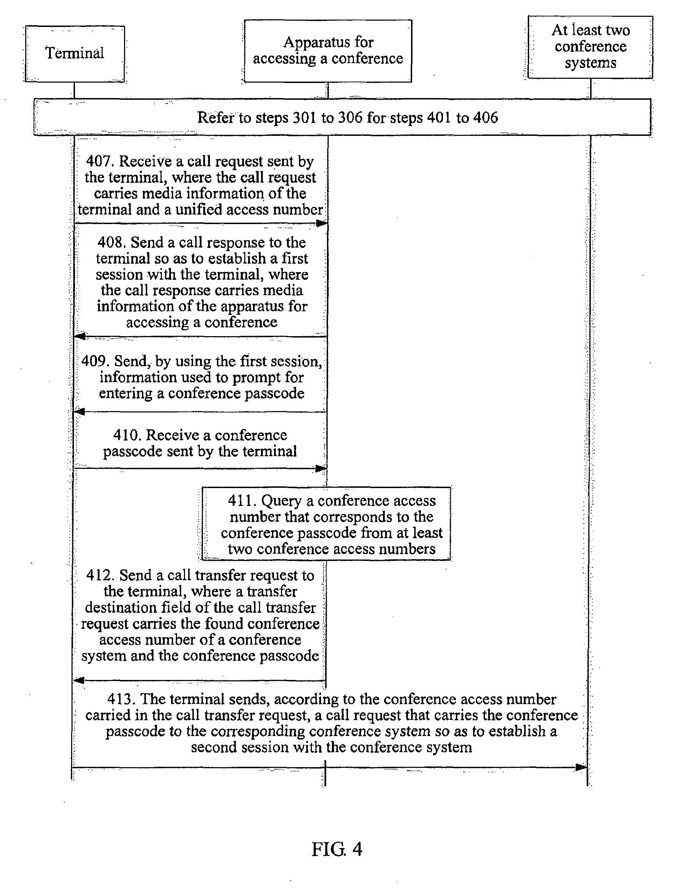

Refer to FIG. 4, which shows a flowchart of a method for accessing a conference according to another embodiment of the present invention. In this embodiment, applying the method for accessing a conference to the apparatus 103 for accessing a conference shown in FIG. 1 is used as an example for description. The method for accessing a conference may include the method for reserving a conference shown in FIG. 3. The method for accessing a conference includes the following steps:
For steps 401 to 406, reference may be made to steps 301 to 306.
Step 407: The apparatus for accessing a conference receives a call request sent by the terminal, where the call request carries media information of the terminal and a unified access number that corresponds to the apparatus for accessing a conference.

In this embodiment, a user accesses a conference by using only one access number. The access number is an access number of the apparatus for accessing a conference. Specifically, to access a conference, the terminal may send a call request to the apparatus for accessing a conference according to the unified access number. A call control network can route the call request to the apparatus for accessing a conference according to the unified access number. In this way, the apparatus for accessing a conference receives the call request of the terminal. Specifically, the call request of the terminal may be an INVITE (Invite) message in the SIP protocol. The INVITE message carries the media information of the terminal. The media information of the terminal generally includes an IP address, a port number, a media type, a media format, and a transmission protocol of the terminal.
Step 408: Send a call response to the terminal so as to establish a first session with the terminal, where the call response carries media information of the apparatus for accessing a conference.

After receiving the call request sent by the terminal, the apparatus for accessing a conference may obtain the media information of the terminal. Then, the apparatus for accessing a conference sends a call response to the terminal to perform media channel negotiation with the terminal and to establish the first session with the terminal, where the call response carries the media information of the apparatus for accessing a conference. The call response may be a 200 OK message in the SIP protocol. The 200 OK message carries the media information of the apparatus for accessing a conference. Generally, the media information of the apparatus for accessing a conference includes an IP address, a port number, a media type, a media format, and a transmission protocol of the apparatus for accessing a conference. In other words, media channel negotiation may be performed, by using the INVITE message and the media information that is carried in the 200 OK message and meets a requirement of the SDP, between the terminal and the apparatus for accessing a conference, so as to establish a media channel (in other words, the first session) used for sending a prompt for entering a conference passcode.
Step 409: Send, by using the first session, information used to prompt for entering a conference passcode.

After the apparatus for accessing a conference establishes the first session with the terminal, the apparatus for accessing a conference sends, by using the first session, information used to prompt for entering a conference passcode to the terminal. This process may be implemented by using IVR (Interactive Voice Response, interactive voice response).
Step 410: Receive a conference passcode sent by the terminal.

The terminal may send, through the established first session or an INFO message in the SIP protocol, a conference passcode of a conference to be joined by the terminal to the apparatus for accessing a conference. The apparatus for accessing a conference accordingly receives the conference passcode sent by the terminal.

Generally, the conference passcode includes a conference number and a conference password, and may be specifically either of the following two forms: 1) a form in which the conference number and the conference password are separated, such as 012345#8888, where 012345 is the conference number, 8888 is the conference password, and # is a separator; 2) a form in which the conference number and the conference password are combined, such as 0123458888, where 012345 is the conference number, and 8888 is the conference password.
Step 411: Query a conference access number that corresponds to the conference passcode from at least two conference access numbers.

The apparatus for accessing a conference may store correspondence between conference passcodes and conference access numbers in advance. The correspondence may be the relationship generated and stored by the apparatus for accessing a conference in step 405.

After receiving the conference passcode sent by the terminal, the apparatus for accessing a terminal queries a conference access number that corresponds to the conference passcode.
Step 412: Send a call transfer request to the terminal, where a transfer destination field of the call transfer request carries the found conference access number and the conference passcode.

After the apparatus for accessing a conference finds the conference access number that corresponds to the conference passcode, the apparatus for accessing a conference sends a REFER request (a call transfer request), where the REFER request carries the found conference access number and the conference passcode. For example, the apparatus for accessing a conference sends a REFER request to the terminal, and a header field of the REFER request carries 60681#0123458888#, where 60681 is the conference access number and 0123458888 is the conference passcode. A call control network can route the REFER to the terminal.
Step 413: The terminal sends, according to the conference access number carried in the call transfer request, a call request that carries the conference passcode to a corresponding conference system so as to establish a second session with the conference system.

After receiving the REFER request, the terminal may re-send, according to the conference access number carried in the call transfer request, a call request that carries the conference passcode to a corresponding conference system. Specifically, this step may include the following substeps:
1) The terminal sends an INVITE message, such as INVITE 60681#0123458888#, to the conference system according to the conference access number in the REFER request, where the INVITE message further carries the media information of the terminal.
2) After receiving the INVITE message, the conference system feeds back a 200 OK message to the terminal, where the 200 OK message carries media information of the conference system.
3) Media channel negotiation is performed between the terminal and the conference system by using the INVITE message and a media channel parameter that is carried in the 200 OK message and meets a requirement of the SDP, so as to establish a media channel used for joining a conference, in other words, to establish the second session between the terminal and the conference system. Then the conference system may add the terminal to a corresponding conference according to the conference passcode.

After the terminal establishes the second session with the conference system, the terminal may further actively send BYE information to the apparatus for accessing a conference. The BYE information may be routed by the call control network to the apparatus for accessing a conference, and the BYE information is used by the terminal to terminate the first session established with the apparatus for accessing a conference.

In conclusion, in the method for accessing a conference according to this embodiment, an apparatus for accessing a conference sends a call transfer request to a terminal to instruct the terminal to establish a second session with a corresponding conference system, so that the terminal joins a conference by using the second session, thereby resolving a problem in the prior art that a user needs to enter different conference access numbers so as to join conferences in different conference systems. In this way, the terminal may access different conference systems by using a unified access number and different conference passcodes to join conferences.

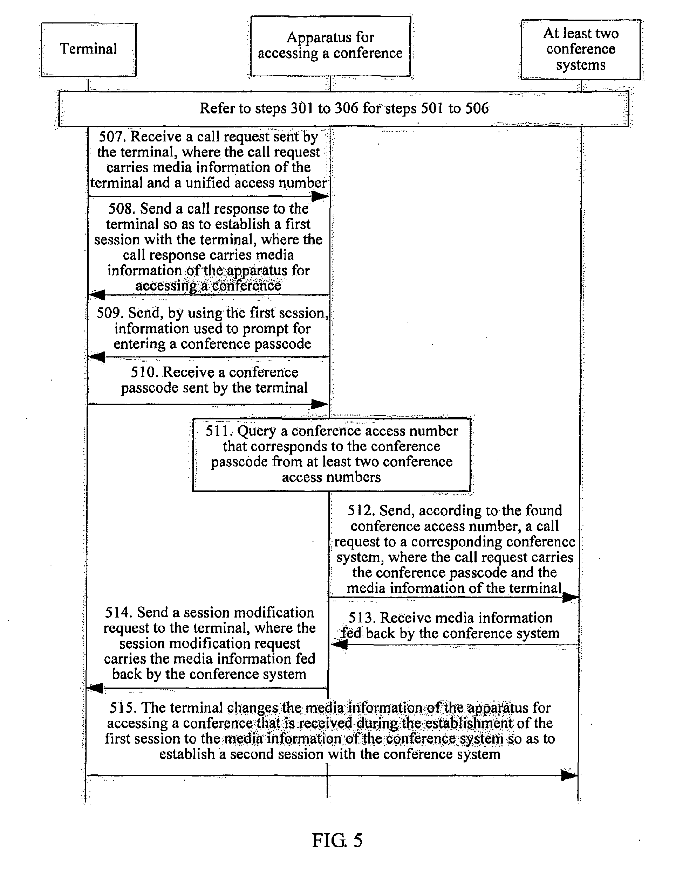

In the method for accessing a conference according to this embodiment of the present invention, two implementation manners are available for the apparatus for accessing a conference to instruct the terminal to establish the second session with the conference system. For a more detailed description of a second implementation manner, reference may be made to the following embodiment:
Refer to FIG. 5, which shows a flowchart of a method for accessing a conference according to another embodiment of the present invention. In this embodiment, applying the method for accessing a conference to the apparatus 103 for accessing a conference shown in FIG. 1 is used as an example for description. The method for accessing a conference may include the method for reserving a conference shown in FIG. 3. The method for accessing a conference includes the following steps:
   For steps 501 to 506, reference may be made to steps 301 to 306.
   Step 507: The apparatus for accessing a conference receives a call request sent by the terminal, where the call request carries media information of the terminal and a unified access number that corresponds to the apparatus for accessing a conference.

In this embodiment, a user accesses a conference by using only one access number. The access number is an access number of the apparatus for accessing a conference. Specifically, to access a conference, the terminal may send a call request to the apparatus for accessing a conference according to the unified access number. A call control network can route the call request to the apparatus for accessing a conference according to the unified access number. In this way, the apparatus for accessing a conference receives the call request of the terminal. Specifically, the call request of the terminal may be an INVITE (Invite) message in the SIP protocol. The INVITE message carries the media information of the terminal. The media information of the terminal generally includes an IP address, a port number, a media type, a media format, and a transmission protocol of the terminal.
Step 508: Send a call response to the terminal so as to establish a first session with the terminal, where the call response carries media information of the apparatus for accessing a conference.

After receiving the call request sent by the terminal, the apparatus for accessing a conference may obtain the media information of the terminal. Then, the apparatus for accessing a conference sends a call response to the terminal to perform media channel negotiation with the terminal and establish the first session with the terminal, where the call response carries the media information of the apparatus for accessing a conference. The call response may be a 200 OK message in the SIP protocol. The 200 OK message carries the media information of the apparatus for accessing a conference. Generally, the media information of the apparatus for accessing a conference includes an IP address, a port number, a media type, a media format, and a transmission protocol of the apparatus for accessing a conference. In other words, media channel negotiation may be performed between the terminal and the apparatus for accessing a conference by using the INVITE message and the media information that is carried in the 200 OK message and meets a requirement of the SDP, so as to establish a media channel (in other words, the first session) used for sending a prompt for entering a conference passcode.
Step 509: Send, by using the first session, information used to prompt for entering a conference passcode.

After the apparatus for accessing a conference establishes the first session with the terminal, the apparatus for accessing a conference sends, by using the first session, information used to prompt for entering a conference passcode to the terminal. This process may be implemented by using IVR (Interactive Voice Response, interactive voice response).
Step 510: Receive a conference passcode sent by the terminal.

The terminal may send, through the established first session or an INFO message in the SIP protocol, a conference passcode of a conference to be joined by the terminal to the apparatus for accessing a conference. The apparatus for accessing a conference accordingly receives the conference passcode sent by the terminal.

Generally, the conference passcode includes a conference number and a conference password, and may be specifically either of the following two forms: 1) a form in which the conference number and the conference password are separated, such as 012345#8888, where 012345 is the conference number, 8888 is the conference password, and # is a separator; 2) a form in which the conference number and the conference password are combined, such as 0123458888, where 012345 is the conference number, and 8888 is the conference password.
Step 511: Query a conference access number that corresponds to the conference passcode from at least two conference access numbers.

The apparatus for accessing a conference may store correspondence between conference passcodes and conference access numbers in advance. The correspondence may be the relationship generated and stored by the apparatus for accessing a conference in step 505.

After receiving the conference passcode sent by the terminal, the apparatus for accessing a terminal queries a conference access number that corresponds to the conference passcode.
Step 512: Send, according to the found conference access number, a call request to a corresponding conference system, where the call request carries the conference passcode and the media information of the terminal.

The apparatus for accessing a conference sends, according to the found conference access number, a call request to a corresponding conference system, where the call request carries the conference passcode and the media information of the terminal. Specifically, the apparatus for accessing a conference sends an INVITE message, such as INVITE 60681#0123458888#, to the conference system according to the found conference access number. It should be noted that the call request carries the media information of the terminal, and the media information of the terminal may be obtained in step 507.
Step 513: Receive media information fed back by the conference system.

Then the apparatus for accessing a conference may receive a 200 OK message from the conference system. The 200 OK message carries media information that is fed back by the conference system and meets a requirement of the SDP.
Step 514: Send a session modification request to the terminal, where the session modification request carries the media information fed back by the conference system.

After receiving the media information fed back by the conference system, the apparatus for accessing a conference sends a re-INVITE (a session modification request) message to the terminal, where the re-INVITE message is used to change the media information of the apparatus for accessing a conference, which is sent by the apparatus for accessing a conference to the terminal during the establishment of the first session, to the media information fed back by the conference system.
Step 515: The terminal changes the media information of the apparatus for accessing a conference that is received during the establishment of the first session to the media information of the conference system so as to establish a second session with the conference system.

After receiving the re-INVITE message, the terminal changes, according to the media information that is carried in the re-INVITE message and fed back by the conference system, the first session established with the apparatus for accessing a conference, so as to establish a second session with the conference system. In other words, the terminal changes the media information of the apparatus for accessing a conference that is received during the establishment of the first session to the media information of the conference system carried in the re-INVITE message so as to establish the second session with the conference system. After receiving the re-INVITE message, the terminal may further feed back a 200 OK message to the apparatus for accessing a conference, where the 200 OK message carries the media information of the terminal. In fact, however, the media information of the terminal has already been sent by the apparatus for accessing a conference to the conference system in step 510. Then the media information of the conference system is sent by the apparatus for accessing a conference to the terminal in step 512. Therefore, in a re-negotiation process with the session modification request, the newly established media channel is a media channel between the terminal and the conference system, and the first session has been essentially changed to the second session between the terminal and the conference system. Then the conference system may add the terminal to a corresponding conference according to the conference passcode.

In conclusion, in the method for accessing a conference according to this embodiment, an apparatus for accessing a conference sends a session modification request to a terminal to instruct the terminal to establish a second session with a corresponding conference system, so that the terminal joins a conference by using the second session, thereby resolving a problem in the prior art that a user needs to enter different conference access numbers so as to join conferences in different conference systems. In this way, the terminal may access different conference systems by using a unified access number and different conference passcodes to join conferences.

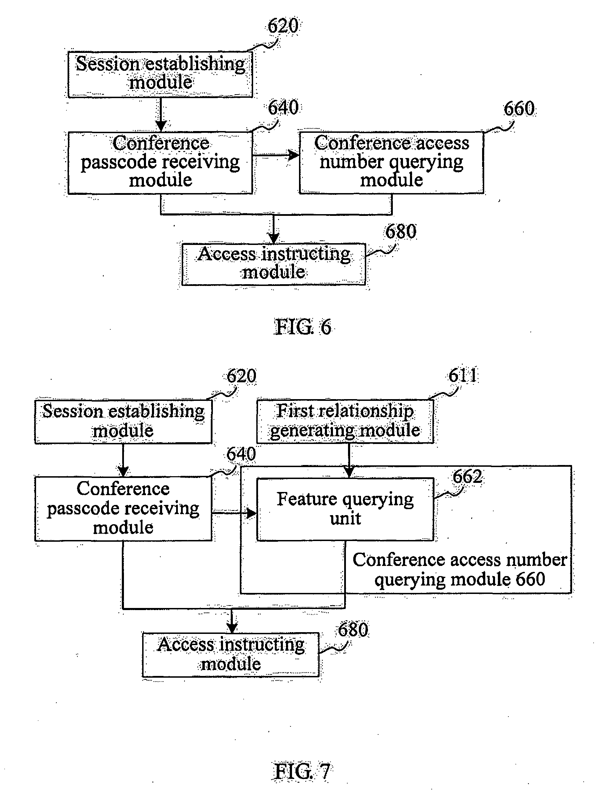

Refer to FIG. 6, which shows a structural block diagram of an apparatus for accessing a conference according to an embodiment of the present invention. The apparatus for accessing a conference includes a session establishing module 620, a conference passcode receiving module 640, a conference access number querying module 660, and an access instructing module 680.

The session establishing module 620 is configured to receive a call request sent by a terminal, where the call request carries media information of the terminal and a unified access number that corresponds to the apparatus for accessing a conference; and send a call response to the terminal so as to establish a first session with the terminal, where the call response carries media information of the apparatus for accessing a conference.

The conference passcode receiving module 640 is configured to send, by using the first session established with the session establishing module 620, information used to prompt for entering a conference passcode, and receive a conference passcode sent by the terminal.

The conference access number querying module 660 is configured to query a conference access number that corresponds to the conference passcode received by the conference passcode receiving module 640 from at least two conference access numbers, where each conference access number corresponds to one conference system.

The access instructing module 680 is configured to instruct, according to the conference access number found by the conference access number querying module 660 and the conference passcode received by the conference passcode receiving module 640, the terminal to establish a second session with a conference system that corresponds to the conference access number, so that the terminal joins a conference by using the second session.

In conclusion, the apparatus for accessing a conference according to this embodiment receives a call request sent by a terminal, where the call request carries a unified access number; sends, by using a first session established with the terminal, information used to prompt for entering a conference passcode, and receives a conference passcode sent by the terminal; queries a conference access number of a conference system that corresponds to the conference passcode; and then instructs, according to the conference access number and the conference passcode, the terminal to establish a second session with the corresponding conference system, so that the terminal joins a conference by using the second session, thereby resolving a problem in the prior art that a user needs to enter different conference access numbers so as to join conferences in different conference systems. In this way, the terminal may access different conference systems by using a unified access number and different conference passcodes to join conferences.

In the apparatus for accessing a conference according to this embodiment of the present invention, two implementation manners are available for the apparatus for accessing a conference to instruct the terminal to establish the second session with the corresponding conference system. For a more detailed description of a first implementation manner, reference may be made to the following embodiment:
Refer to FIG. 7, which shows a structural block diagram of an apparatus for accessing a conference according to another embodiment of the present invention. The apparatus for accessing a conference includes a first relationship generating module 611, a session establishing module 620, a conference passcode receiving module 640, a conference access number querying module 660, and an access instructing module 680.

The first relationship generating module 611 is configured to obtain the format feature of the conference passcode allocated by the conference system that corresponds to the conference access number, and generate correspondence between the format feature and the conference access number of the conference system.

The session establishing module 620 is configured to receive a call request sent by a terminal, where the call request carries media information of the terminal and a unified access number that corresponds to the apparatus for accessing a conference; and send a call response to the terminal so as to establish a first session with the terminal, where the call response carries media information of the apparatus for accessing a conference.

The conference passcode receiving module 640 is configured to send, by using the first session established with the session establishing module 620, information used to prompt for entering a conference passcode, and receive a conference passcode sent by the terminal.

The conference access number querying module 660 is configured to query a conference access number that corresponds to the conference passcode received by the conference passcode receiving module 640 from at least two conference access numbers, where each conference access number corresponds to one conference system.

The access instructing module 680 is specifically configured to send, to the terminal, a call transfer request of which a transfer destination field carries the conference access number found by the conference access number querying module 660 and the conference passcode received by the conference passcode receiving module 640, so that the terminal sends, according to the conference access number carried in the call transfer request, a call request that carries the conference passcode to the corresponding conference system so as to establish the second session with the conference system, and the conference system adds the terminal to a corresponding conference according to the conference passcode.

Specifically, the conference access number querying module 660 further specifically includes a feature querying unit 662.

The feature querying unit 662 is configured to analyze a format feature of the conference passcode received by the conference passcode receiving module 640; and query, according to the correspondence between the format features and the conference access numbers generated by the first relationship generating module 611, a conference access number that corresponds to the format feature of the conference passcode received by the conference passcode receiving module 640.

In conclusion, in the apparatus for accessing a conference according to this embodiment, the apparatus for accessing a conference sends a call transfer request to a terminal to control the terminal to establish a second session with a corresponding conference system, so that the terminal joins a conference by using the second session, thereby resolving a problem in the prior art that a user needs to enter different conference access numbers so as to join conferences in different conference systems. In this way, the terminal may access different conference systems by using a unified access number and different conference passcodes to join conferences.

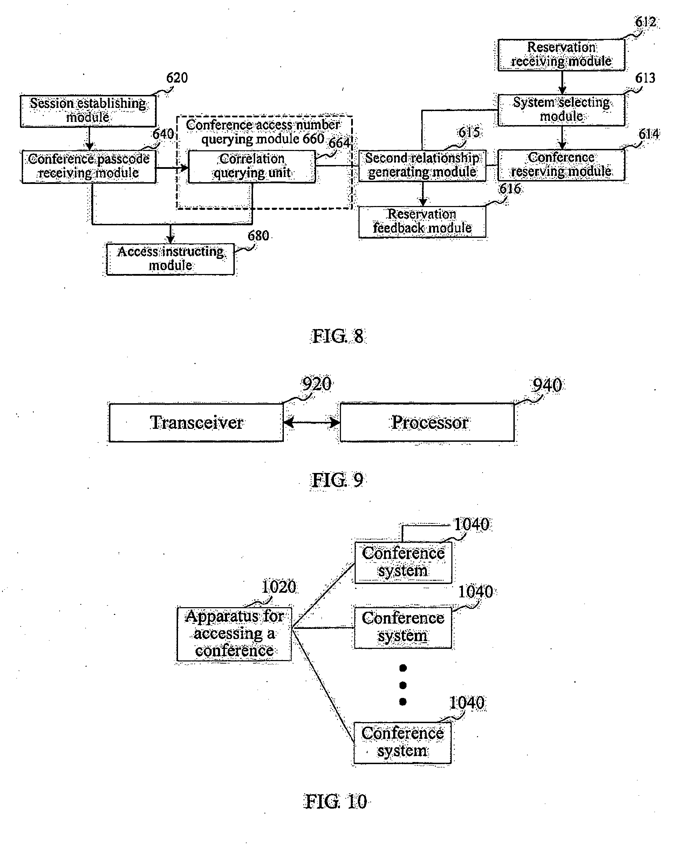

In the apparatus for accessing a conference according to this embodiment of the present invention, two implementation manners are available for the apparatus for accessing a conference to instruct the terminal to establish the second session with the conference system. For a more detailed description of a second implementation manner, reference may be made to the following embodiment:
Refer to FIG. 8, which shows a structural block diagram of an apparatus for accessing a conference according to another embodiment of the present invention. The apparatus for accessing a conference includes a reservation receiving module 612, a system selecting module 613, a conference reserving module 614, a second relationship generating module 615, a reservation feedback module 616, a session establishing module 620, a conference passcode receiving module 640, a conference access number querying module 660, an information acquiring module 670, and an access instructing module 680.

The reservation receiving module 612 is configured to receive a conference reservation request sent by a conference reserving party, where the conference reservation request carries a conference type that includes a voice conference, a video conference, or a desktop conference, and the conference reserving party may be a terminal or a conference portal.

The system selecting module 613 is configured to select, according to the conference type that is carried in the conference reservation request received by the reservation receiving module 612, a conference system with conference capability that matches the conference type.

The conference reserving module 614 is configured to initiate conference reservation to the conference system selected by the system selecting module 613 so as to obtain a corresponding conference passcode.

The second relationship generating module 615 is configured to generate, according to the conference passcode received by the conference reserving module 614, correspondence between the conference passcode and a conference access number of the conference system selected by the system selecting module 613.

The reservation feedback module 616 is configured to send the conference passcode received by the conference reserving module 614 and the unified access number to the conference reserving party.

The session establishing module 620 is configured to receive a call request sent by a terminal, where the call request carries media information of the terminal and a unified access number that corresponds to the apparatus for accessing a conference; and send a call response to the terminal so as to establish a first session with the terminal, where the call response carries media information of the apparatus for accessing a conference.

The conference passcode receiving module 640 is configured to send, by using the first session established with the session establishing module 620, information used to prompt for entering a conference passcode, and receive a conference passcode sent by the terminal.

The conference access number querying module 660 is configured to query a conference access number that corresponds to the conference passcode received by the conference passcode receiving module 640 from at least two conference access numbers, where each conference access number corresponds to one conference system.

The information acquiring module 670 is configured to send, according to the conference access number found by the conference access number querying module 660, a call request to a corresponding conference system, where the call request carries the conference passcode received by the conference passcode receiving module 640 and the media information of the terminal received by the session establishing module 620; and receive media information of the conference system fed back by the conference system.

The access instructing module 680 is specifically configured to send a session modification request that carries the media information of the conference system acquired by the information acquiring module 670 to the terminal, so that the terminal changes the media information of the apparatus for accessing a conference that is received during the establishment of the first session to the media information of the conference system so as to establish the second session with the conference system, and the conference system adds the terminal to a corresponding conference according to the conference passcode.

Specifically, the conference access number querying module 660 further includes a correlation querying unit 664.

The correlation querying unit 664 is configured to query, according to the correspondence between the conference passcode and the conference access number of the conference system generated by the second relationship generating module 615, the conference access number that corresponds to the conference passcode received by the conference passcode receiving module 640.

In conclusion, in the apparatus for accessing a conference according to this embodiment, the apparatus for accessing a conference sends a call request that carries a conference passcode to a conference system according to a conference access number of the conference system, so as to receive media information fed back by the conference system; and then sends a session modification request that carries the media information to a terminal, so that the terminal modifies the first session according to the media information to establish the second session, thereby resolving a problem in the prior art that a user needs to enter a combination of a different conference access number and a conference passcode for multiple times during conference access. In this way, the terminal may access different conference systems by using a unified access number and different conference passcodes to join conferences. In addition, the entire process is transparent and invisible to the user.

It is worth noting that the access instructing module of the apparatus for accessing a conference shown in FIG. 7 is implemented in the first implementation manner, and the conference access number querying module uses the feature querying unit during the implementation; and the access instructing module of the apparatus for accessing a conference shown in FIG. 8 is implemented in the second implementation manner, and the conference access number querying module uses the correlation querying unit during the implementation. Obviously, if the access instructing module is implemented in the first implementation manner, the conference access number querying module uses the correlation querying unit; or if the access instructing module is implemented in the second implementation manner, the conference access number querying module uses the feature querying unit. Therefore, a new embodiment may be implemented by appropriately re-combining relevant modules shown in FIG. 7 or FIG. 8.

It should be noted that when the apparatus for accessing a conference according to the preceding embodiment accesses a conference, division of the foregoing function modules is exemplary only; in actual implementation, the foregoing functions can be allocated to different modules and implemented as necessary, in other words, the inner structure of the apparatus is divided into different function modules to implement all or a part of the functions described previously. In addition, the apparatus for accessing a conference according to the preceding embodiment and the embodiments of the methods for accessing a conference belong to same thoughts. For a specific implementation process, reference may be made to the method embodiments and no further details are provided herein.

Refer to FIG. 9, which shows a structural diagram of an apparatus for accessing a conference according to an embodiment of the present invention. The apparatus for accessing a conference includes a transceiver 920 and a processor 940.

The transceiver 920 is configured to receive a call request sent by a terminal, where the call request carries media information of the terminal and a unified access number that corresponds to the apparatus for accessing a conference; send a call response to the terminal, where the call response carries media information of the apparatus for accessing a conference; send, by using a first session established by a processor, information used to prompt for entering a conference passcode, and receive a conference passcode sent by the terminal; and receive or send a message generated in a process of establishing a second session between the terminal and a conference system.

The processor 940 is configured to send the call response to the terminal through the transceiver 920 so as to establish the first session with the terminal, where the call response carries the media information of the apparatus for accessing a conference; query a conference access number that corresponds to the conference passcode received by the transceiver 920 from at least two conference access numbers, where each conference access number corresponds to one conference system; and instruct the terminal to establish the second session with the conference system that corresponds to the conference access number.

In conclusion, the apparatus for accessing a conference according to this embodiment receives a call request sent by a terminal, where the call request carries a unified access number; sends, by using a first session established with the terminal, information used to prompt for entering a conference passcode, and receives a conference passcode sent by the terminal; queries a conference access number of a conference system that corresponds to the conference passcode; and then instructs, according to the conference access number and the conference passcode, the terminal to establish a second session with the corresponding conference system, so that the terminal joins a conference by using the second session, thereby resolving a problem in the prior art that a user needs to enter different conference access numbers so as to join conferences in different conference systems. In this way, the terminal may always access different conference systems by using a unified access number and different conference passcodes to join conferences.

In an exemplary embodiment, on a basis of the embodiment shown in FIG. 9, the processor 940 is configured to instruct the terminal to establish the second session with the conference system that corresponds to the conference access number, and specifically:
the processor 940 is specifically configured to generate a call transfer request, and carry both the conference access number of the conference system and the conference passcode in a transfer destination field of the call transfer request; and send the call transfer request to the terminal through the transceiver 920, so that the terminal sends, according to the conference access number carried in the call transfer request, a call request that carries the conference passcode to the corresponding conference system so as to establish the second session with the conference system, and the conference system adds the terminal to a corresponding conference according to the conference passcode.

In addition, the transceiver 920 is further configured to send, according to the conference access number of the conference system, a call request that carries both the conference passcode and the media information of the terminal to the conference system, and receive media information of the conference system fed back by the conference system; and
the processor 940 is configured to instruct the terminal to establish the second session with the conference system, and specifically:
the processor 940 is specifically configured to generate a session modification request, and carry the media information of the conference system in the session modification request; and send the session modification request to the terminal through the transceiver 920, so that the terminal changes the media information of the apparatus for accessing a conference that is received during the establishment of the first session to the media information of the conference system so as to establish the second session with the conference system, and the conference system adds the terminal to a corresponding conference according to the conference passcode.

According to a possible implementation manner, the processor 940 is configured to query a conference access number that corresponds to the conference passcode received by the transceiver from at least two conference access numbers, and specifically:
the processor 940 is specifically configured to query, according to a correspondence between conference passcodes and conference access numbers, a conference access number that corresponds to the conference passcode from the at least two conference access numbers; or
the processor 940 is specifically configured to analyze a format feature of the conference passcode, and query, according to a correspondence between format features and conference access numbers, a conference access number that corresponds to the format feature of the conference passcode from the at least two conference access numbers.

More specifically, when the processor 940 is specifically configured to analyze the format feature of the conference passcode, and query, according to the correspondence between format features and conference access numbers, the conference access number that corresponds to the format feature of the conference passcode from the at least two conference access numbers, then:
the processor 940 is further configured to obtain the format feature of the conference passcode allocated by the conference system that corresponds to the conference access number, and generate correspondence between the format feature and the conference access number of the conference system.

When the processor 940 is specifically configured to query, according to the correspondence between conference passcodes and conference access numbers, the conference access number that corresponds to the conference passcode from the at least two conference access numbers, then:
the transceiver 940 is further configured to receive a conference reservation request sent by a conference reserving party, where the conference reservation request carries a conference type that includes a voice conference, a video conference, or a desktop conference; initiate conference reservation to a conference system selected by the processor, and receive a corresponding conference passcode fed back by the conference system; and feed back the conference passcode and the unified access number to the conference reserving party; and
the processor 940 is further configured to select, according to the conference type received by the transceiver 920, a conference system with matching conference capability; and generate, according to the conference passcode received by the transceiver 920, the correspondence between the conference passcode and a conference access number of the conference system.

In another aspect, the processor 940 is specifically configured to match, according to the conference type, a conference system with matching conference capability, and if there are more than two matching conference systems, select one of them according to a predefined policy, where the predefined policy includes any one of a polling policy, a load balancing policy, and a random policy.

In an exemplary embodiment, by storing the correspondence between conference passcodes and conference access numbers of conference systems in a conference reservation process, the apparatus for accessing a conference can always store the correlation in advance before a terminal initiates a call request. In addition, a unified access number other than a conference access number of a conference system is fed back, so that the terminal always initiates a call request to the unified access number to start a conference access process.

Refer to FIG. 10, which shows a structural block diagram of a conference service system according to an embodiment of the present invention. The conference service system includes an apparatus 1020 for accessing a conference and at least two conference systems 1040.

The apparatus 1020 for accessing a conference may be the apparatus for accessing a conference according to any one of the embodiments shown in FIG. 6, FIG. 7, FIG. 8, and FIG. 9.

The conference systems 1040 may be two or more same or different conference systems, and the conference systems 1040 may be voice conference systems, video conference systems, or desktop conference systems.

In conclusion, in the conference service system according to this embodiment, an apparatus for accessing a conference receives a call request sent by a terminal, where the call request carries a unified access number; sends, by using a first session established with the terminal, information used to prompt for entering a conference passcode, and receives a conference passcode sent by the terminal; queries a conference access number of a conference system that corresponds to the conference passcode; and then instructs, according to the conference access number and the conference passcode, the terminal to establish a second session with the corresponding conference system, so that the terminal joins a conference by using the second session, thereby resolving a problem in the prior art that a user needs to enter different conference access numbers so as to join conferences in different conference systems. In this way, the terminal may access different conference systems by using a unified access number and different conference passcodes to join conferences.

Sequence numbers of the preceding embodiments of the present invention are intended for description only, other than representing excellence or weakness of the embodiments.

A person of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

The foregoing descriptions are merely exemplary embodiments of the present invention, but are not intended to limit the present invention. All modifications, equivalent replacements, improvements and the like made within the principle of the present invention shall fall within the protection scope of the present invention.

## Claims

1. A method for accessing a conference applied to an implementation environment having an apparatus (103) for accessing a conference, a terminal (101) and multiple conference systems (104), comprising:
receiving, by the apparatus (103) for accessing a conference, a call request sent by the terminal, wherein the call request carries media information of the terminal and a unified access number that corresponds to the apparatus (103) for accessing a conference; and sending a call response to the terminal so as to establish a first session with the terminal, wherein the call response carries media information of the apparatus (103) for accessing a conference;
sending, by using the first session, information used to prompt for entering a conference passcode, and receiving a conference passcode sent by the terminal (101), **characterized by**
querying a conference access number that corresponds to the conference passcode sent by the terminal (101) from at least two conference access numbers, wherein each conference access number corresponds to one of the multiple conference systems (104); wherein the querying specifically comprises: analyzing a format feature of the conference passcode sent by the terminal (101), and querying, according to correspondence between format features and conference access numbers, a conference access number that corresponds to the format feature of the conference passcode sent by the terminal (101) from the at least two conference access numbers; and
instructing, according to the queried conference access number and the conference passcode sent by the terminal (101), the terminal (101) to establish a second session with a conference system that corresponds to the queried conference access number, so that the terminal (101) joins a conference by using the second session.

2. The method for accessing a conference according to claim 1, wherein the instructing, according to the queried conference access number and the conference passcode sent by the terminal (101), the terminal (101) to establish a second session with a conference system that corresponds to the queried conference access number, so that the terminal (101) joins a conference by using the second session specifically comprises:
sending, to the terminal (101), a call transfer request of which a transfer destination field carries the queried conference access number and the conference passcode sent by the terminal (101), so that the terminal (101) sends, according to the queried conference access number carried in the call transfer request, a call request that carries the conference passcode sent by the terminal (101) to a conference system corresponding to the queried conference access number so as to establish the second session with the conference system corresponding to the queried conference access number, and the conference system corresponding to queried conference access number adds the terminal (101) to the conference according to the conference passcode sent by the terminal (101).

3. The method for accessing a conference according to claim 1, wherein before the instructing, according to the queried conference access number and the conference passcode sent by the terminal (101), the terminal (101) to establish a second session with a conference system that corresponds to the queried conference access number, the method further comprises:
sending, according to the queried conference access number, a call request that carries both the conference passcode sent by the terminal (101) and the media information of the terminal (101) to a corresponding conference system corresponding to the queried conference access number, and receiving media information of the corresponding conference system fed back by the conference system corresponding to the queried conference access number; and
the instructing, according to the queried conference access number and the conference passcode sent by the terminal (101), the terminal (101) to establish a second session with a conference system that corresponds to the queried conference access number, so that the terminal (101) joins a conference by using the second session comprises:
sending a session modification request that carries the media information of the conference system corresponding to the queried conference access number to the terminal (101), so that the terminal (101) changes the media information of the apparatus (103) for accessing a conference that is received during the establishment of the first session to the media information of the conference system corresponding to the queried conference access number so as to establish the second session with the conference system corresponding to the queried conference access number, and the conference system corresponding to the queried conference access number adds the terminal (101) to the conference according to the conference passcode sent by the terminal (101).

4. The method for accessing a conference according to claim 1, wherein if the querying a conference access number that corresponds to the conference passcode sent by the terminal (101) comprises: analyzing a format feature of the conference passcode send by the terminal (101), and querying, according to correspondence between format features and conference access numbers, the conference access number that corresponds to the format feature of the conference passcode send by the terminal (101) from the at least two conference access numbers,
before the receiving a call request sent by the terminal (101), the method further comprises:
obtaining the format feature of the conference passcode sent by the terminal (101) allocated by the conference system that corresponds to the queried conference access number; and
generating correspondence between the format feature and the queried conference access number.

5. An apparatus for accessing a conference applied to an implementation environment having the apparatus for accessing a conference, a terminal (101) and multiple conference systems (104), comprising:
a session establishing module (620), configured to receive a call request sent by the terminal (101), wherein the call request carries media information of the terminal (101) and a unified access number that corresponds to the apparatus (103) for accessing a conference; and send a call response to the terminal (101) so as to establish a first session with the terminal (101), wherein the call response carries media information of the apparatus (103) for accessing a conference;
a conference passcode receiving module (640), configured to send, by using the first session, information used to prompt for entering a conference passcode, and receive a conference passcode sent by the terminal (101), **characterizing in that** the apparatus further comprises
a conference access number querying module (660), configured to query a conference access number that corresponds to the conference passcode send by terminal (101) from at least two conference access numbers, wherein each conference access number corresponds to one of the multiple conference systems (104); wherein the conference access number querying module (660) specifically comprises a feature querying unit (662), the feature querying unit (662) is configured to analyze a format feature of the conference passcode sent by the terminal (101), and query, according to correspondence between format features and conference access numbers, a conference access number that corresponds to the format feature of the conference passcode sent by the terminal (101) from the at least two conference access numbers; and
an access instructing module (680), configured to instruct, according to the queried conference access number and the conference passcode send by the terminal (101), the terminal (101) to establish a second session with a conference system that corresponds to the queried conference access number, so that the terminal (101) joins a conference by using the second session.

6. The apparatus for accessing a conference according to claim 5, wherein the access instructing module (680) is specifically configured to send, to the terminal (101), a call transfer request of which a transfer destination field carries the queried conference access number and the conference passcode send by the terminal (101), so that the terminal (101) sends, according to the queried conference access number carried in the call transfer request, a call request that carries the conference passcode to a conference system corresponding to the queried conference access number so as to establish the second session with the conference system corresponding to the queried conference access number, and the conference system corresponding to queried conference access number adds the terminal (101) to the conference according to the conference passcode send by the terminal (101).

7. The apparatus for accessing a conference according to claim 5, wherein the apparatus for accessing a conference further comprises an information acquiring module (670);
the information acquiring module (670) is configured to send, according to the queried conference access number, a call request that carries both the conference passcode send by the terminal (101) and the media information of the terminal (101) to a corresponding conference system corresponding to the queried conference access number, and receive media information of the corresponding conference system fed back by the conference system corresponding to the queried conference access number; and
the access instructing module (680) is specifically configured to send a session modification request that carries the media information of the conference system corresponding to the queried conference access number to the terminal (101), so that the terminal (101) changes the media information of the apparatus for accessing a conference that is received during the establishment of the first session to the media information of the conference system corresponding to the queried conference access number so as to establish the second session with the conference system, and the conference system corresponding to the queried conference access number adds the terminal (101) to the conference according to the conference passcode send by the terminal (101).

8. The apparatus for accessing a conference according to claim 7, wherein if the conference access number querying module (660) comprises the feature querying unit (662), the apparatus for accessing a conference further comprises:
a first relationship generating module (611), configured to obtain the format feature of the conference passcode send by the terminal (101) allocated by the conference system that corresponds to the queried conference access number, and generate correspondence between the format feature and the queried conference access number.

9. A conference service system, wherein the system comprises the apparatus (103) for accessing a conference according to any one of claims 5 to 8 and at least two conference systems (104).

## Patentansprüche

1. Verfahren zum Zugreifen auf eine Konferenz, das auf eine Implementierungsumgebung angewendet wird, die eine Vorrichtung (103) zum Zugreifen auf eine Konferenz, ein Endgerät (101) und mehrere Konferenzsysteme (104) aufweist, wobei das Verfahren Folgendes umfasst:
Empfangen durch die Vorrichtung (103) zum Zugreifen auf eine Konferenz einer von dem Endgerät gesendeten Anrufanforderung, wobei die Anrufanforderung Medieninformationen des Endgeräts und eine vereinheitlichte Zugangsnummer, die der Vorrichtung (103) zum Zugreifen auf eine Konferenz entspricht, führt; und Senden einer Anrufantwort an das Endgerät, um eine erste Sitzung mit dem Endgerät aufzubauen, wobei die Anrufantwort Medieninformationen der Vorrichtung (103) zum Zugreifen auf eine Konferenz führt;
Senden unter Verwendung der ersten Sitzung von Informationen, die verwendet werden, um zum Eingeben eines Konferenz-Passcodes aufzufordern, und Empfangen eines von dem Endgerät (101) gesendeten Konferenz-Passcodes, **gekennzeichnet durch**
Abfragen einer Konferenz-Zugangsnummer, die dem von dem Endgerät (101) gesendeten Konferenz-Passcode entspricht, von wenigstens zwei Konferenz-Zugangsnummern, wobei jede Konferenz-Zugangsnummer einem der mehreren Konferenzsysteme (104) entspricht; wobei das Abfragen spezifisch Folgendes umfasst: Analysieren eines Formatmerkmals des von dem Endgerät (101) gesendeten Konferenz-Passcodes und Abfragen gemäß einer Übereinstimmung zwischen den Formatmerkmalen und den Konferenz-Zugangsnummern einer Konferenz-Zugangsnummer, die dem Formatmerkmal des von dem Endgerät (101) gesendeten Konferenz-Passcodes entspricht, von den wenigstens zwei Konferenz-Zugangsnummern; und
Anweisen des Endgeräts (101) gemäß der abgefragten Konferenz-Zugangsnummer und dem von dem Endgerät (101) gesendeten Konferenz-Passcode, eine zweite Sitzung mit einem Konferenzsystem aufzubauen, das der abgefragten Konferenz-Zugangsnummer entspricht, so dass das Endgerät (101) unter Verwendung der zweiten Sitzung einer Konferenz beitritt.

2. Verfahren zum Zugreifen auf eine Konferenz nach Anspruch 1, wobei das Anweisen des Endgeräts (101) gemäß der abgefragten Konferenz-Zugangsnummer und dem von dem Endgerät (101) gesendeten Konferenz-Passcode, eine zweite Sitzung mit einem Konferenzsystem aufzubauen, das der abgefragten Konferenz-Zugangsnummer entspricht, so dass das Endgerät (101) unter Verwendung der zweiten Sitzung einer Konferenz beitritt, spezifisch Folgendes umfasst:
Senden an das Endgerät (101) einer Anrufübertragungsanforderung, deren Übertragungszielfeld die abgefragte Konferenz-Zugangsnummer und den durch das Endgerät (101) gesendeten Konferenz-Passcode führt, so dass das Endgerät (101) gemäß der in der Anrufübertragungsanforderung geführten abgefragten Konferenz-Zugangsnummer eine Anrufanforderung, die den durch das Endgerät (101) gesendeten Konferenz-Passcode führt, an ein Konferenzsystem, das der abgefragten Konferenz-Zugangsnummer entspricht, sendet, um die zweite Sitzung mit dem Konferenzsystem, das der abgefragten Konferenz-Zugangsnummer entspricht, aufzubauen, wobei das Konferenzsystem, das der abgefragten Konferenz-Zugangsnummer entspricht, das Endgerät (101) gemäß dem von dem Endgerät (101) gesendeten Konferenz-Passcode zu der Konferenz hinzufügt.

3. Verfahren zum Zugreifen auf eine Konferenz nach Anspruch 1, wobei vor dem Anweisen des Endgeräts (101) gemäß der abgefragten Konferenz-Zugangsnummer und dem von dem Endgerät (101) gesendeten Konferenz-Passcode, eine zweite Sitzung mit einem Konferenzsystem, das der abgefragten Konferenz-Zugangsnummer entspricht, aufzubauen, das Verfahren ferner Folgendes umfasst:
Senden gemäß der abgefragten Konferenz-Zugangsnummer einer Anrufanforderung, die sowohl den durch das Endgerät (101) gesendeten Konferenz-Passcode als auch die Medieninformationen des Endgeräts (101) führt, an ein entsprechendes Konferenzsystem, das der abgefragten Konferenz-Zugangsnummer entspricht, und Empfangen von Medieninformationen des entsprechenden Konferenzsystems, die von dem Konferenzsystem, das der abgefragten Konferenz-Zugangsnummer entspricht, zurückgeleitet werden; wobei
das Anweisen des Endgeräts (101) gemäß der abgefragten Konferenz-Zugangsnummer und dem von dem Endgerät (101) gesendeten Konferenz-Passcode, eine zweite Sitzung mit einem Konferenzsystem, das der abgefragten Konferenz-Zugangsnummer entspricht, aufzubauen, so dass das Endgerät (101) unter Verwendung der zweiten Sitzung einer Konferenz beitritt, Folgendes umfasst:
Senden einer Sitzungsmodifikationsanforderung, die die Medieninformationen des Konferenzsystems, das der abgefragten Konferenz-Zugangsnummer entspricht, führt, an das Endgerät (101), so dass das Endgerät (101) die Medieninformationen der Vorrichtung (103) zum Zugreifen auf eine Konferenz, die während des Aufbaus der ersten Sitzung empfangen werden, in die Medieninformationen des Konferenzsystems, das der abgefragten Konferenz-Zugangsnummer entspricht, ändert, um die zweite Sitzung mit dem Konferenzsystem, das der abgefragten Konferenz-Zugangsnummer entspricht, aufzubauen, wobei das Konferenzsystem, das der abgefragten Konferenz-Zugangsnummer entspricht, das Endgerät (101) gemäß dem von dem Endgerät (101) gesendeten Konferenz-Passcode zu der Konferenz hinzufügt.

4. Verfahren zum Zugreifen auf eine Konferenz nach Anspruch 1, wobei, falls das Abfragen einer Konferenz-Zugangsnummer, die dem von dem Endgerät (101) gesendeten Konferenz-Passcode entspricht, Folgendes umfasst: Analysieren eines Formatmerkmals des von dem Endgerät (101) gesendeten Konferenz-Passcodes und Abfragen gemäß der Übereinstimmung zwischen den Formatmerkmalen und den Konferenz-Zugangsnummern der Konferenz-Zugangsnummer, die dem Formatmerkmal des von dem Endgerät (101) gesendeten Konferenz-Passcodes entspricht, von den wenigstens zwei Konferenz-Zugangsnummern,
das Verfahren vor dem Empfangen einer von dem Endgerät (101) gesendeten Anrufanforderung ferner Folgendes umfasst:
Erhalten des Formatmerkmals des von dem Endgerät (101) gesendeten Konferenz-Passcodes, das durch das Konferenzsystem, das der abgefragten Konferenz-Zugangsnummer entspricht, zugewiesen wird; und
Erzeugen einer Übereinstimmung zwischen dem Formatmerkmal und der abgefragten Konferenz-Zugangsnummer.

5. Vorrichtung zum Zugreifen auf eine Konferenz, die auf eine Implementierungsumgebung angewendet wird, die die Vorrichtung zum Zugreifen auf eine Konferenz, ein Endgerät (101) und mehrere Konferenzsysteme (104) aufweist, wobei die Vorrichtung Folgendes umfasst:
ein Sitzungsaufbaumodul (620), das konfiguriert ist, eine von dem Endgerät (101) gesendete Anrufanforderung zu empfangen, wobei die Anrufanforderung Medieninformationen des Endgeräts (101) und eine vereinheitlichte Zugangsnummer, die der Vorrichtung (103) zum Zugreifen auf eine Konferenz entspricht, führt; und eine Anrufantwort an das Endgerät (101) zu senden, um eine erste Sitzung mit dem Endgerät (101) aufzubauen, wobei die Anrufantwort Medieninformationen der Vorrichtung (103) zum Zugreifen auf eine Konferenz führt;
ein Konferenz-Passcode-Empfangsmodul (640), das konfiguriert ist, unter Verwendung der ersten Sitzung Informationen, die verwendet werden, um zum Eingeben eines Konferenz-Passcodes aufzufordern, zu senden und einen von dem Endgerät (101) gesendeten Konferenz-Passcode zu empfangen, **dadurch gekennzeichnet, dass** die Vorrichtung ferner Folgendes umfasst:
ein Konferenz-Zugangsnummer-Abfragemodul (660), das konfiguriert ist, eine Konferenz-Zugangsnummer, die dem von dem Endgerät (101) gesendeten Konferenz-Passcode entspricht, von wenigstens zwei Konferenz-Zugangsnummern abzufragen, wobei jede Konferenz-Zugangsnummer einem der mehreren Konferenzsysteme (104) entspricht; wobei das Konferenz-Zugangsnummer-Abfragemodul (660) spezifisch eine Merkmalsabfrageeinheit (662) umfasst, wobei die Merkmalsabfrageeinheit (662) konfiguriert ist, ein Formatmerkmal des von dem Endgerät (101) gesendeten Konferenz-Passcodes zu analysieren und gemäß einer Übereinstimmung zwischen den Formatmerkmalen und den Konferenz-Zugangsnummern eine Konferenz-Zugangsnummer, die dem Formatmerkmal des von dem Endgerät (101) gesendeten Konferenz-Passcodes entspricht, von den wenigstens zwei Konferenz-Zugangsnummern abzufragen; und
ein Zugangsanweisungsmodul (680), das konfiguriert ist, gemäß der abgefragten Konferenz-Zugangsnummer und dem von dem Endgerät (101) gesendeten Konferenz-Passcode das Endgerät (101) anzuweisen, eine zweite Sitzung mit einem Konferenzsystem aufzubauen, das der abgefragten Konferenz-Zugangsnummer entspricht, so dass das Endgerät (101) unter Verwendung der zweiten Sitzung einer Konferenz beitritt.

6. Vorrichtung zum Zugreifen auf eine Konferenz nach Anspruch 5, wobei das Zugangsanweisungsmodul (680) spezifisch konfiguriert ist, eine Anrufübertragungsanforderung, deren Übertragungszielfeld die abgefragte Konferenz-Zugangsnummer und den durch das Endgerät (101) gesendeten Konferenz-Passcode führt, an das Endgerät (101) zu senden, so dass das Endgerät (101) gemäß der in der Anrufübeitragungsanforderung geführten abgefragten Konferenz-Zugangsnummer eine Anrufanforderung, die den Konferenz-Passcode führt, an ein Konferenzsystem, das der abgefragten Konferenz-Zugangsnummer entspricht, sendet, um die zweite Sitzung mit dem Konferenzsystem, das der abgefragten Konferenz-Zugangsnummer entspricht, aufzubauen, wobei das Konferenzsystem, das der abgefragten Konferenz-Zugangsnummer entspricht, das Endgerät (101) gemäß dem von dem Endgerät (101) gesendeten Konferenz-Passcode zu der Konferenz hinzufügt.

7. Vorrichtung zum Zugreifen auf eine Konferenz nach Anspruch 5, wobei die Vorrichtung zum Zugreifen auf eine Konferenz ferner ein Informationserfassungsmodul (670) umfasst; wobei
das Informationserfassungsmodul (670) konfiguriert ist, gemäß der abgefragten Konferenz-Zugangsnummer eine Anrufanforderung, die sowohl den durch das Endgerät (101) gesendeten Konferenz-Passcode als auch die Medieninformationen des Endgeräts (101) führt, an ein entsprechendes Konferenzsystem, das der abgefragten Konferenz-Zugangsnummer entspricht, zu senden und die Medieninformationen des entsprechenden Konferenzsystems, die von dem Konferenzsystem, das der abgefragten Konferenz-Zugangsnummer entspricht, zurückgeleitet werden, zu empfangen; und
das Zugangsanweisungsmodul (680) spezifisch konfiguriert ist, eine Sitzungsmodifikationsanforderung, die die Medieninformationen des Konferenzsystems, das der abgefragten Konferenz-Zugangsnummer entspricht, führt, an das Endgerät (101) zu senden, so dass das Endgerät (101) die Medieninformationen der Vorrichtung zum Zugreifen auf eine Konferenz, die während des Aufbaus der ersten Sitzung empfangen werden, in die Medieninformationen des Konferenzsystems, das der abgefragten Konferenz-Zugangsnummer entspricht, ändert, um die zweite Sitzung mit dem Konferenzsystem aufzubauen, wobei das Konferenzsystem, das der abgefragten Konferenz-Zugangsnummer entspricht, das Endgerät (101) gemäß dem von dem Endgerät (101) gesendeten Konferenz-Passcode zu der Konferenz hinzufügt.

8. Vorrichtung zum Zugreifen auf eine Konferenz nach Anspruch 7, wobei, falls das Konferenz-Zugangsnummer-Abfragemodul (660) die Merkmalsabfrageeinheit (662) umfasst, die Vorrichtung zum Zugreifen auf eine Konferenz ferner Folgendes umfasst:
ein erstes Beziehungserzeugungsmodul (611), das konfiguriert ist, das Formatmerkmal des von dem Endgerät (101) gesendeten Konferenz-Passcodes, das durch das Konferenzsystem, das der abgefragten Konferenz-Zugangsnummer entspricht, zugewiesen wird, zu erhalten und eine Übereinstimmung zwischen dem Formatmerkmal und der abgefragten Konferenz-Zugangsnummer zu erzeugen.

9. Konferenzdienstsystem, wobei das System die Vorrichtung (103) zum Zugreifen auf eine Konferenz nach einem der Ansprüche 5 bis 8 und wenigstens zwei Konferenzsysteme (104) umfasst.

## Revendications

1. Procédé permettant d'accéder à une conférence appliqué à un environnement de mise en oeuvre ayant un appareil (103) permettant d'accéder à une conférence, un terminal (101) et plusieurs systèmes de conférence (104), comprenant les étapes suivantes :
recevoir, par l'appareil (103) permettant d'accéder à une conférence, une requête d'appel envoyée par le terminal, la requête d'appel contenant des informations multimédia du terminal et un numéro d'accès unifié qui correspond à l'appareil (103) permettant d'accéder à une conférence ; et envoyer une réponse d'appel au terminal pour établir une première session avec le terminal, la réponse d'appel contenant des informations multimédia de l'appareil (103) permettant d'accéder à une conférence ;
envoyer, en utilisant la première session, des informations utilisées pour inviter à entrer un code de conférence, et recevoir un code de conférence envoyé par le terminal (101), **caractérisé par** :
demander un numéro d'accès à une conférence qui correspond au code de conférence envoyé par le terminal (101) à partir d'au moins deux numéros d'accès à une conférence, chaque numéro d'accès à une conférence correspondant à un système de conférence parmi les multiples systèmes de conférence (104) ; l'étape consistant à demander comprenant spécifiquement : analyser une caractéristique de format du code de conférence envoyé par le terminal (101) et demander, selon une correspondance entre des caractéristiques de format et des numéros d'accès à une conférence, un numéro d'accès à une conférence qui correspond à la caractéristique de format du code de conférence envoyé par le terminal (101) à partir desdits deux numéros d'accès à une conférence ; et
ordonner au terminal (101), selon le numéro d'accès à une conférence demandé et le code de conférence envoyé par le terminal (101), d'établir une deuxième session avec un système de conférence qui correspond au numéro d'accès à une conférence demandé, afin que le terminal (101) joigne une conférence en utilisant la deuxième session.

2. Procédé permettant d'accéder à une conférence selon la revendication 1, dans lequel l'étape consistant à ordonner au terminal (101), selon le numéro d'accès à une conférence demandé et le code de conférence envoyé par le terminal (101), d'établir une deuxième session avec un système de conférence qui correspond au numéro d'accès à une conférence demandé afin que le terminal (101) joigne une conférence en utilisant la deuxième session, comprend spécifiquement :
envoyer, au terminal (101), une requête de transfert d'appel dont un champ de destination de transfert contient le numéro d'accès à une conférence demandé et le code de conférence envoyé par le terminal (101), de sorte que le terminal (101) envoie, selon le numéro d'accès à une conférence demandé contenu dans la requête de transfert d'appel, une requête d'appel qui contient le code de conférence envoyé par le terminal (101) à un système de conférence correspondant au numéro d'accès à une conférence demandé, pour établir la deuxième session avec le système de conférence correspondant au numéro d'accès à une conférence demandé, et de sorte que le système de conférence correspondant au numéro d'accès à une conférence demandé ajoute le terminal (101) à la conférence selon le code de conférence envoyé par le terminal (101).

3. Procédé permettant d'accéder à une conférence selon la revendication 1 dans lequel, avant l'étape consistant à ordonner au terminal (101), selon le numéro d'accès à une conférence demandé et le code de conférence envoyé par le terminal (101), d'établir une deuxième session avec un système de conférence qui correspond au numéro d'accès à une conférence demandé, le procédé comprend en outre :
envoyer, selon le numéro d'accès à une conférence demandé, une requête d'appel qui contient le code de conférence envoyé par le terminal (101) ainsi que les informations multimédia du terminal (101) à un système de conférence correspondant, qui correspond au numéro d'accès à une conférence demandé, et recevoir des informations multimédia du système de conférence correspondant retournées par le système de conférence correspondant au numéro d'accès à une conférence demandé ; et
l'étape consistant à ordonner au terminal (101), selon le numéro d'accès à une conférence demandé et le code de conférence envoyé par le terminal (101), d'établir une deuxième session avec un système de conférence qui correspond au numéro d'accès à une conférence demandé afin que le terminal (101) joigne une conférence en utilisant la deuxième session, comprend :
envoyer une requête de modification de session qui contient les informations multimédia du système de conférence correspondant au numéro d'accès à une conférence demandé au terminal (101), de sorte que le terminal (101) remplace les informations multimédia de l'appareil (103) permettant d'accéder à une conférence, qui sont reçues durant l'établissement de la première session, par les informations multimédia du système de conférence correspondant au numéro d'accès à une conférence demandé pour établir la deuxième session avec le système de conférence correspondant au numéro d'accès à une conférence demandé, et de sorte que le système de conférence correspondant au numéro d'accès à une conférence demandé ajoute le terminal (101) à la conférence selon le code de conférence envoyé par le terminal (101).

4. Procédé permettant d'accéder à une conférence selon la revendication 1 dans lequel, si l'étape consistant à demander un numéro d'accès à une conférence qui correspond au code de conférence envoyé par le terminal (101) comprend : analyser une caractéristique de format du code de conférence envoyé par le terminal (101) et demander, selon une correspondance entre des caractéristiques de format et des numéros d'accès à une conférence, le numéro d'accès à une conférence qui correspond à la caractéristique de format du code de conférence envoyé par le terminal (101) à partir desdits deux numéros d'accès à une conférence,
avant l'étape consistant à recevoir une requête d'appel envoyée par le terminal (101), le procédé comprend en outre :
obtenir la caractéristique de format du code de conférence envoyé par le terminal (101) affecté par le système de conférence qui correspond au numéro d'accès à une conférence demandé ; et
générer une correspondance entre la caractéristique de format et le numéro d'accès à une conférence demandé.

5. Appareil permettant d'accéder à une conférence appliqué à un environnement de mise en oeuvre ayant l'appareil permettant d'accéder à une conférence, un terminal (101) et plusieurs systèmes de conférence (104), comprenant :
un module d'établissement de session (620), configuré pour recevoir une requête d'appel envoyée par le terminal (101), la requête d'appel contenant des informations multimédia du terminal (101) et un numéro d'accès unifié qui correspond à l'appareil (103) permettant d'accéder à une conférence ; et envoyer une réponse d'appel au terminal (101) pour établir une première session avec le terminal (101), la réponse d'appel contenant des informations multimédia de l'appareil (103) permettant d'accéder à une conférence ;
un module de réception de code de conférence (640), configuré pour envoyer, en utilisant la première session, des informations utilisées pour inviter à entrer un code de conférence, et recevoir un code de conférence envoyé par le terminal (101),
**caractérisé en ce que** l'appareil comprend en outre :
un module de demande de numéro d'accès à une conférence (660), configuré pour demander un numéro d'accès à une conférence qui correspond au code de conférence envoyé par le terminal (101) à partir d'au moins deux numéros d'accès à une conférence, chaque numéro d'accès à une conférence correspondant à un système de conférence parmi les multiples systèmes de conférence (104) ; le module de demande de numéro d'accès à une conférence (660) comprenant spécifiquement une unité de demande de caractéristique (662), l'unité de demande de caractéristique (662) étant configurée pour analyser une caractéristique de format du code de conférence envoyé par le terminal (101) et demander, selon une correspondance entre des caractéristiques de format et des numéros d'accès à une conférence, un numéro d'accès à une conférence qui correspond à la caractéristique de format du code de conférence envoyé par le terminal (101) à partir desdits deux numéros d'accès à une conférence ; et
un module de commande d'accès (680), configuré pour ordonner au terminal (101), selon le numéro d'accès à une conférence demandé et le code de conférence envoyé par le terminal (101), d'établir une deuxième session avec un système de conférence qui correspond au numéro d'accès à une conférence demandé, afin que le terminal (101) joigne une conférence en utilisant la deuxième session.

6. Appareil permettant d'accéder à une conférence selon la revendication 5, dans lequel le module de commande d'accès (680) est spécifiquement configuré pour envoyer au terminal (101) une requête de transfert d'appel, dont un champ de destination de transfert contient le numéro d'accès à une conférence demandé et le code de conférence envoyé par le terminal (101), de sorte que le terminal (101) envoie, selon le numéro d'accès à une conférence demandé contenu dans la requête de transfert d'appel, une requête d'appel qui contient le code de conférence à un système de conférence correspondant au numéro d'accès à une conférence demandé pour établir la deuxième session avec le système de conférence correspondant au numéro d'accès à une conférence demandé, et de sorte que le système de conférence correspondant au numéro d'accès à une conférence demandé ajoute le terminal (101) à la conférence selon le code de conférence envoyé par le terminal (101).

7. Appareil permettant d'accéder à une conférence selon la revendication 5, dans lequel l'appareil permettant d'accéder à une conférence comprend en outre un module d'acquisition d'informations (670) ;
le module d'acquisition d'informations (670) étant configuré pour envoyer, selon le numéro d'accès à une conférence demandé, une requête d'appel qui contient le code de conférence envoyé par le terminal (101) ainsi que les informations multimédia du terminal (101) à un système de conférence correspondant, qui correspond au numéro d'accès à une conférence demandé, et recevoir des informations multimédia du système de conférence correspondant retournées par le système de conférence correspondant au numéro d'accès à une conférence demandé ; et
le module de commande d'accès (680) étant spécifiquement configuré pour envoyer une requête de modification de session qui contient les informations multimédia du système de conférence correspondant au numéro d'accès à une conférence demandé au terminal (101), de sorte que le terminal (101) remplace les informations multimédia de l'appareil permettant d'accéder à une conférence, qui sont reçues durant l'établissement de la première session, par les informations multimédia du système de conférence correspondant au numéro d'accès à une conférence demandé pour établir la deuxième session avec le système de conférence, et de sorte que le système de conférence correspondant au numéro d'accès à une conférence demandé ajoute le terminal (101) à la conférence selon le code de conférence envoyé par le terminal (101).

8. Appareil permettant d'accéder à une conférence selon la revendication 7 dans lequel, si le module de demande de numéro d'accès à une conférence (660) comprend l'unité de demande de caractéristique (662), l'appareil permettant d'accéder à une conférence comprend en outre :
un premier module de génération de relation (611), configuré pour obtenir la caractéristique de format du code de conférence envoyé par le terminal (101) affecté par le système de conférence qui correspond au numéro d'accès à une conférence demandé, et générer une correspondance entre la caractéristique de format et le numéro d'accès à une conférence demandé.

9. Système de service de conférence, dans lequel le système comprend l'appareil (103) permettant d'accéder à une conférence selon l'une quelconque des revendications 5 à 8 et au moins deux systèmes de conférence (104).
